# EUROPEAN PATENT SPECIFICATION

(11) **EP 1 995 810 B1**
(45) Date of publication and mention of the grant of the patent: **30.06.2010**
(21) Application number: 08009512.8
(22) Date of filing: 23.05.2008
(51) Int. Cl.: H01M 8/02, C08G 59/68, C08K 3/04

(54) **Fuel cell separator resin composition and fuel cell separator**
Harzzusammensetzung für einen Brennstoffzellenseparator und Brennstoffzellenseparator
Composition de résine de séparateur de pile à combustible et séparateur de pile à combustible

(30) Priority: 25.05.2007 JP 2007138827
(43) Date of publication of application: 26.11.2008
(73) Proprietor: Nichias Corporation, Tokyo 105-8555 (JP)
(72) Inventor: Murakami, Atsushi, Hamamatsu-shi Shizuoka (JP); Shimizu, Takayoshi, Hamamatsu-shi Shizuoka (JP)
(74) Representative: Grünecker, Kinkeldey, Stockmair & Schwanhäusser Anwaltssozietät

(56) References cited:
- EP-A- 1 453 127
- EP-A- 1 460 703
- EP-A- 1 657 269
- JP-A- 2002 201 257

## Description

### FIELD OF THE INVENTION

The present invention relates to a fuel cell separator resin composition and a resin composition as a molding material therefor.

### BACKGROUND OF THE INVENTION

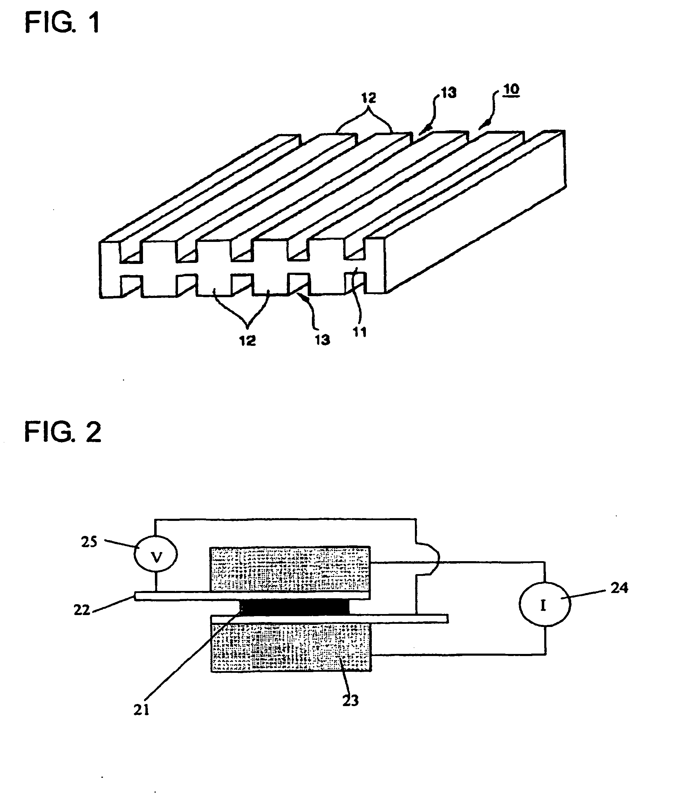

As shown, for example, by a schematic perspective view in Fig. 1, a fuel cell separator 10 is formed by providing a plurality of partition walls 12 in a protruding state at predetermined intervals on both sides of a flat plate portion 11. In order to form a fuel cell, a number of fuel cell separators 10 are laminated along the protruding direction (the vertical direction in Fig. 1) of the partition walls 12. This lamination allows reactive gas (hydrogen or oxygen) to flow through channels 13 formed by pairs of adjacent partition walls 12. The fuel cell separator is produced by molding a resin composition containing a resin material and a conductive material such as graphite to the shape as described above.

As a method for forming the fuel cell separator, there is generally used a method in which the above-mentioned composition containing a thermosetting resin such as a phenol resin or an epoxy resin as the resin material is placed in a mold provided with flow paths for gas or cooling water, and molded by heat compression molding in which the composition is hot pressed. However, in recent years, in order to improve productivity, it has also been tried to produce the separator by injection molding, instead of heat compression molding. For example, there is known a method of injecting a resin composition containing a graphite material and a thermoplastic or thermosetting resin from a cylinder into a mold, thereby forming a fuel cell separator (see patent documents 1 to 3). In such injection molding, the resin composition is transferred to the closed mold through a narrow passage called a runner. When the resin composition has low fluidity, a short shot occurs in which a part of the mold can not be filled, or high pressure is required for filling, so that the inner pressure of the mold increases to cause deformation of the mold, leading to deterioration of dimensional accuracy of a molded article, in some cases. Accordingly, in order to fill the mold without clearance with the resin composition to obtain a molded article having high dimensional accuracy, the resin composition is required to have high fluidity.

On the other hand, an epoxy resin has been widely used as a resin material. However, a curing agent and a curing accelerator are necessary to cure the epoxy resin, and an organic phosphine such as triphenylphosphine has been generally used as the curing accelerator (see patent document 4). However, only a fuel cell separator having low conductivity is obtained from the resin composition using the organic phosphine as the curing accelerator. In particular, when artificial graphite is used as the carbon material and triphenylphosphine as the curing accelerator is used in combination with this, conductivity deteriorates. Further, when natural graphite is used as the carbon material, impurities of metal components are contained in large amounts, which sometimes adversely affect an electrolyte membrane used in a fuel cell.

Cosequently, it has been tried to use a diazabicyclo compound as the curing accelerator (see patent document 5). However, in the resin composition described in patent document 5, expanded graphite is used as the carbon material, and impurities derived therefrom are contained in large amounts, which possibly adversely affect the electrolyte membrane.

As described above, a fuel cell separator resin composition excellent in conductivity and fluidity and containing little impurities has not been obtained by the conventional technique.
Patent Document 1: JP-A-2003-338294
Patent Document 2: JP-A-2003-297386
Patent Document 3: JP-A-2003-242994
Patent Document 4: JP-A-2003-257447
Patent Document 5: JP-A-2006-137809

### SUMMARY OF THE INVENTION

The invention has been made in view of the above-mentioned circumstances, and an object thereof is to provide a fuel cell separator resin composition excellent in conductivity and fluidity and containing little impurities. Further, another object of the invention is to provide a fuel cell separator excellent in conductivity and dimensional accuracy and having no fear of causing deterioration in performance of a solid electrolyte.

In order to achieve the above-mentioned objects, the invention provides a fuel cell separator resin composition comprising:
(A) an epoxy resin;
(B) a curing agent;
(C) a curing accelerator comprising a salt of a diazabicyclo compound and an organic acid; and
(D) a carbon material,
wherein the content of the carbon material (D) is 35 to 85% by mass based on the total amount of the composition,
wherein the carbon material (D) comprises high crystalline artificial graphite having a particle size of 150 to 500 µm in an amount of 5 to 100% by mass based on the total amount of the carbon material (D), and
wherein the content of the curing accelerator (C) is 1 to 20 parts by weight per 100 parts by weight of the curing agent (B).
The present invention also provides a fuel cell separator produced by injection molding of the above-mentioned fuel cell separator resin composition.

In the fuel cell separator resin composition of the invention, a specific urea compound is used as the curing accelerator, so that fluidity is not decreased to make injection molding possible. Further, the carbon material contains high crystalline artificial graphite as a main component, so that the resin composition is excellent in conductivity, and further contains little impurities, resulting in no fear of causing deterioration in performance of a solid electrolyte. Accordingly, the fuel cell separator of the invention is also excellent in dimensional accuracy and conductivity, and further causes no deterioration in performance of the solid electrolyte. Thus, a high-performance fuel cell is obtained.

### BRIEF DESCRIPTION OF THE DRAWINGS

Fig. 1 is a perspective view showing one embodiment of a fuel cell separator.
Fig. 2 is a schematic view illustrating a method for measuring the resistance in a penetrating direction.

The reference numerals used in the drawings denote the following, respectively.
10: Fuel Cell Separator
11: Flat Plate Portion
12: Partition Walls
13: Channels
21: Sample
22: Carbon Paper
23: Electrode
24: Ammeter
25: Voltmeter

### DETAILED DESCRIPTION OF THE INVENTION

The invention will be described in detail below.

The fuel cell separator resin composition (hereinafter simply referred to as a resin composition) of the invention comprises (A) an epoxy resin, (B) a curing agent, (C) a curing accelerator and (D) a carbon material as essential components.

The epoxy resin is a compound having two or more epoxy groups, and a conventionally known one can be used. Examples thereof include but are not limited to bisphenol type epoxy resins such as a bisphenol A type epoxy resin, a bisphenol F type epoxy resin, a bisphenol AF type epoxy resin, a bisphenol S type epoxy resin, a hydrogenated bisphenol A type epoxy resin and a halogenated bisphenol A type epoxy resin; multifunctional epoxy resins such as a phenol novolak type epoxy resin, a cresol novolak type epoxy resin, a bisphenol A novolak type epoxy resin, a tris-hydroxyphenylmethane type epoxy resin, a phenol dicyclopentadiene type epoxy resin, a halogenated phenol novolak type epoxy resin, a naphthol novolak type epoxy resin, resorcin epoxide and a tetraphenylol ethane type epoxy resin; cyclic epoxy resins; biphenyl type epoxy resins; naphthalene type epoxy resins; glycidyl ester type epoxy resins and glycidyl amine type epoxy resins. Of the above-mentioned epoxy resins, multifunctional epoxy resins are suitably used in the invention, because a molded article having high heat resistance and strength. The epoxy equivalent is preferably from 50 to 500, and more preferably from 100 to 300. When the epoxy equivalent is too low, a molded article becomes brittle. On the other hand, when the epoxy equivalent is too high, only a molded article having low heat resistance and strength is obtained.

The epoxy resin reacts with the curing agent to form an epoxy-cured product. Various known compounds can be used as the curing agent. Examples thereof include but are not limited to aliphatic, alicyclic and aromatic polyamines such as diethylenetriamine, triethylenetetramine, tetraethylenepentamine, menthenediamine, isophoronediamine, N-aminoethylpiperazine, m-xylenediamine and diaminodiphenylmethane, or carbonates thereof; acid anhydrides such as phthalic anhydride, methyltetrahydrophthalic anhydride, methylhexahydrophthalic anhydride, methylnadic anhydride, dodecylsuccinic anhydride, pyromellitic anhydride, benzophenonetetracarboxylic anhydride, trimellitic anhydride and polyazelaic anhydride; polyphenols such as phenol novolak and cresol novolak; and polymercaptan. The plurality of curing agents can also be used in combination. Of the above-mentioned curing agents, the curing agents such as polyamines or carbonates thereof, acid anhydrides, polyphenols and polymercaptan are called a polyaddition type curing agent, because they themselves react with an epoxy compound by polyaddition reaction to constitute the epoxy-cured product. An excess or deficiency of the polyaddition type curing agent leads to the remaining of unreacted functional groups, so that the amount thereof added has an appropriate range. In general, the polyaddition type curing agent is used preferably in an amount of 0.7 to 1.2 equivalent weights, and particularly in an amount of 0.8 to 1.1 equivalent weights, per epoxy group of an epoxy resin precursor. The curing rate of the thermosetting resin can be arbitrarily changed by variously selecting the kind and amount of curing agent, the kind of thermosetting resin and the kind and amount of curing accelerator. One skilled in the art will easily determine the kinds and amounts of thermosetting resin, curing agent and curing accelerator, in accordance with the intended curing conditions. In the invention, a compound having two or more phenolic hydroxyl groups is preferred as the curing agent. Such compounds include the above-mentioned polyphenols and bisphenol A, such as phenol novolak, resol novolak, bisphenol A novolak, aralkyl type phenol novolak, a triphenylmethane type phenol resin, a terpenephenol resin, naphthol novolak and a phenol dicyclopentadiene resin. The compound having two or more phenolic hydroxyl groups can provide a molded article having high heat resistance.

In the invention, a salt of a diazabicyclo compound and an organic acid is used as the curing accelerator. Although there is no particular limitation on the diazabicyclo compound, examples thereof include but are not limited to 1,8-diazabicyclo(5,4,0)undecene-7 (abbreviated to DBU), 1,5-diazabicyclo(4,3,0)nonene-5 (abbreviated to DBN) and 6-dibutylamino-1,8-diazabicyclo(5,4,0)undecene-7. Above all, 1,8-diazabicyclo(5,4,0)undecene-7 is a preferred diazabicyclo compound in the invention, because it is inexpensive, easily available, high in stability and hardly volatilize.

The organic acids include but are not limited to, for example, orthophthalic acid (an aromatic multivalent organic acid, acid dissociation constant: 2.95), isophthalic acid (an aromatic multivalent organic acid, acid dissociation constant: 3.48), terephthalic acid (an aromatic multivalent organic acid, acid dissociation constant: 3.54), trimesic acid (an aromatic multivalent organic acid, acid dissociation constant: 3.13), formic acid (acid dissociation constant: 3.55), acetic acid (acid dissociation constant: 4.76), phenol (an aromatic organic acid, acid dissociation constant: 9.89), benzoic acid (an aromatic organic acid, acid dissociation constant: 4.00), salicylic acid (an aromatic organic acid, acid dissociation constant: 2.75), oxalic acid (a multivalent organic acid, acid dissociation constant: 1.27), cinnamic acid (acid dissociation constant: 4.44), tartaric acid (a multivalent organic acid, acid dissociation constant: 3.04), lactic acid (acid dissociation constant: 3.86), phenol novolak (a multivalent organic acid, acid dissociation constant: unknown), orthocresol novolak (a multivalent organic acid, acid dissociation constant: unknown) and the like. Further, the organic acid is incorporated into the epoxy resin during curing reaction, so that the organic acid having a more inflexible molecular structure and larger number of reaction sites with the epoxy resin can provide a molded article having higher heat resistance and strength. Accordingly, the aromatic organic acid having an inflexible structure and a multivalent organic acid having many reaction sites with the epoxy resin are preferred.

The salt of the diazabicyclo compound and the organic acid dissociates to the diazabicyclo compound and the organic acid upon heating, and the dissociated diazabicyclo compound acts as the curing accelerator. Accordingly, when the temperature at which the salt of the diazabicyclo compound and the organic acid dissociates is high, a molding material having high heat stability is obtained. The dissociation temperature is proportional to the strength of the organic acid. When the organic acid is strong, the molding material having high heat stability can be obtained. However, when the organic acid is extremely strong, the salt of the diazabicyclo compound and the organic acid is hydrolyzed by deliquescence of the organic acid to rather decrease heat stability. Further, when an extremely strong organic acid is used, a mixing apparatus or a molding apparatus is corroded in some cases. The strength of an acid is represented by the acid dissociation constant (pKa), and the smaller acid dissociation constant shows the stronger acidity. Accordingly, the acid dissociation constant of the organic acid used in the invention has a preferred range. The acid dissociation constant of the organic acid used in the invention is preferably from 0 to 10, and more preferably from 2 to 4. For example, a strong acid such as sulfuric acid or hydrochloric acid is unfavorable, because the acid dissociation constant thereof sometimes takes a negative value less than 0, although it depends on the concentration thereof. Further, when the aromatic organic acid or the multivalent organic acid is used as the organic acid, the molded article having high heat resistance and strength is obtained. For example, orthophthalic acid, isophthalic acid, terephthalic acid and trimesic acid have appropriate acid dissociation constants and also are aromatic multivalent organic acids, so that the molding material particularly excellent in heat stability, strength and heat resistance can be obtained. The acid dissociation constant in the invention indicates the first-step acid dissociation constant (pKal) in the case of the multivalent organic acid.

The salt of the diazabicyclo compound and the organic acid can be produced by methods which have hitherto been known. For example, the diazabicyclo compound and the organic acid are dissolved in a solvent and mixed, or stirred at a temperature equal to or higher than the melting point of the organic acid, thereby being able to produce the salt. However, the production method is not limited to this method. When the salt of the diazabicyclo compound and the organic acid is produced, stirring and mixing are preferably performed in an atmosphere of nitrogen so that the diazabicyclo compound and the organic acid are not deteriorated by oxidation.

As for the mixing ratio of the diazabicyclo compound and the organic acid, when the ratio of the organic acid is high, the resin composition is excellent in heat stability. However, activity as the curing accelerator decreases to take a long period of time for molding and to cause the necessity to perform molding at high temperature. On the other hand, when the ratio of the organic acid is low, the resin composition is impaired in heat stability. In the invention, the amount of the organic acid is preferably from 10 to 2,000 parts by weight, more preferably from 50 to 500 parts by weight, and still more preferably from 80 to 120 parts by weight, based on 100 parts by weight of the diazabicyclo compound.

Further, it is also possible to use a commercially available salt of a diazabicyclo compound and an organic acid as the curing accelerator.

The carbon material is a conductive material mainly composed of carbon atoms, and specifically, it means but is not limited to expanded graphite, artificial graphite, natural graphite, carbon black, carbon fiber, carbon nanofiber, carbon nanotube, diamond-like carbon, fullerene, carbon nanohorn, hard carbon or glass-like carbon.

Of these, natural graphite is a naturally occurring carbon material. Accordingly, metal components such as iron, calcium and sodium are contained in large amounts as natural product-derived impurities, so that these promote deterioration of an electrolyte membrane of a fuel cell in some cases. It is therefore unfavorable to increase the ratio of natural graphite in the resin crude composition of the invention. Expanded graphite is a graphite material obtained by processing natural graphite, and easily forms conductive paths due to its anisotropy to be able to obtain a composition excellent in conductivity. However, a natural product-derived raw material is used, so that similarly to natural graphite, deterioration of the electrolyte membrane with the metal components is promoted in some cases.

Then, in the invention, high crystalline artificial graphite having an average particle size of 150 to 500µm is used as a main component of the carbon material. The carbon material may be entirely composed of the high crystalline artificial graphite having an average particle size of 150 to 500µm, or may be used in combination with the above-mentioned different carbon material. That is to say, the ratio of the high crystalline artificial graphite having an average particle size of 150 to 500µm in the whole carbon material is preferably from 5 to 100% by mass, more preferably from 50 to 95% by mass, still more preferably from 70 to 90% by weight, and particularly preferably from 80 to 85% by weight. When the ratio of the expanded graphite is low, contact resistance increases. When the ratio of the high crystalline artificial graphite having an average particle size of 150 to 500µm is low, electric resistance becomes high. When the ratio of the high crystalline artificial graphite having an average particle size of 150 to 500µm is too high, mechanical strength becomes low.

The high crystalline artificial graphite means artificial graphite having a narrow graphite plane distance. The graphite plane distance as used herein is an index for representing a crystalline state of the graphite, and a smaller value indicates a crystal more developed. The graphite crystals take a configuration of a hexagonal net-like plane, and the graphite developed in the crystals becomes a state in which spreading in a crystal plane direction is large and lamination in a longitudinal direction is dense. The graphite plane distance is a value measured with the distance between the planes of the graphite crystals averaged.

The perfect crystal of graphite has a graphite plane distance of 0.3354 nm. However, when the value of the graphite plane distance is low, anisotropy of graphite particles becomes high because of crystal growth in the plane direction. The graphite crystals flows well in a direction parallel to the hexagonal net-like crystal plane, but is difficult to flow in a perpendicular direction. Accordingly, one having a large crystal plane is improved in conductivity. The same applies to a molding material obtained by mixing graphite and a resin, and one using graphite in which crystals have grown is improved in conductivity. Accordingly, from the viewpoint of conductivity, the crystal plane distance has a preferred range. The preferred range in the invention is from 0.3354 nm to 0.3365 nm, the more preferred range is from 0.3354 nm to 0.3362 nm, and the still more preferred range is from 0.3354 nm to 0.3360 nm.

The graphite crystal plane distance is measured by XRD (X-ray diffraction), and calculated from the angle (2θ) at which a peak of a 002 plane as a basal plane is confirmed. Specifically, it is calculated by the Bragg equation λ=2d·sinθ. At this time, d is the plane distance, θ is 1/2 of the peak angle, and λ is the wavelength of an optical system of an XRD apparatus. A method for calculating the plane distance from the results measured by XRD is known information which can be easily analogized by one skilled in the art who handles inorganic materials.

As the graphite having such a crystal plane distance, there is artificial graphite obtained by burning needle coke. The needle coke is calcined coke having extremely strong anisotropy, which partially has a lamellar crystal structure which is a crystal structure characteristic of the graphite, and when pulverized, it is split into an elongated form in a direction perpendicular to a crystal layer to form elongated acicular particles. It is therefore called needle coke. In the needle coke, the graphite crystal structure is completed to some degree, so that it can be easily graphitized, and utilized in large amounts in the production of graphite electrodes for steelmaking which allow large electric currents to flow.

As a typical method for producing the needle coke, there is the following method. Aromatic-rich, particularly polycyclic aromatic-rich coal tar, coal tar pitch or petroleum-derived heavy oil is subjected to an impurity removal treatment, and then, slowly coked by a delayed coker at 300 to 700°C to form green coke containing about 7 to 15% by mass of volatile matter. Thereafter, this is calcined at a temperature of about 1000 to 1500°C to increase the carbon content to 98 to 99% by mass, thereby producing the needle coke. Then, the needle coke thus obtained is calcined at a temperature of 2000 to 3000°C, thereby obtaining the above-mentioned high crystalline artificial graphite.

When the needle coke is graphitized, the configuration of the needle coke is not limited. For example, graphitization may be performed in a state where the needle coke is formed into an appropriate shape, followed by pulverization, or a needle coke powder may be calcined as it is. The needle coke is calcined coke scarcely containing volatile matter, so that it shows no fusion bonding properties even when heated to the graphitization temperature. Accordingly, the needle coke can be graphitized by burning it immediately after pulverization. The artificial graphite may be produced by kneading the needle coke with binder pitch, molding the resulting kneaded product by an appropriate means such as extrusion or compression molding, and graphitizing the molded article, followed by pulverization.

Further, it is necessary to use one having an average particle size within the specific range as the high crystalline artificial graphite. When the average particle size is too small, the compound viscosity becomes high, resulting in deterioration of dimensional accuracy of the fuel cell separator or failure to secure fluidity necessary for injection molding. On the other hand, when the average particle size is too large, graphite particles can not pass through a portion having a small thickness in a mold cavity because of interference between the mold cavity and the graphite particles. Accordingly, a phenomenon of failing to fill a molding material in a mold (a short shot) sometimes occurs similarly to the case where the average particle size is too small. Consequently, the high crystalline artificial graphite having an average particle size of 150 to 500 µm is used in the invention.

The average particle size used in the invention means the average particle size measured with a laser diffraction type particle size distribution analyzer. When particles dispersed in water are irradiated with a laser beam, the scattered (diffracted) light is generated from the particles. The intensity of the scattered light depends on the particle size parameter and the refractive index of the particles. The laser diffraction method is a method of measuring the distribution of the intensity of the scattered light to determine the particle size distribution. The measuring apparatus is commercially available, for example, from Shimadzu Corporation or Horiba, Ltd.

Further, the artificial graphite obtained by extrusion molding the needle coke together with binder pitch and graphitizing the molded article has strong orientation, so that the molding material having low electric resistance can be obtained. High crystalline graphite is often used as electrode materials used in electric steelmaking, and a cut powder generated in cutting it can also be used. The high crystalline graphite thus obtained is pulverized and classified as needed to obtain the powder having the above-mentioned particle size.

Although most artificial graphite powders generally commercially available have an average particle size of 100 µm or less, they usually have certain particle size distribution, and particles having a particle size exceeding 100 µm are also contained. Accordingly, of commercially available products, one having a maximum particle size may be got and classified to obtain the artificial graphite having a desired average particle size. Further, a commercially available electrode material may be pulverized.

Furthermore, the high crystalline artificial graphite is extremely high in anisotropy, so that it takes a tabular form or an acicular form in many cases. For this reason, in addition to high conductivity of the high crystalline graphite itself, it easily forms conductive paths when mixed with the resin, thereby being able to obtain a high-conductive fuel cell separator.

As for the compounding ratio of the above-mentioned respective components in the resin composition, the amount of the carbon material is required to be 35 to 85% by mass based on the total amount of the resin composition. When the ratio of the carbon material is too low, conductivity decreases. On the other hand, when the ratio of the carbon material is too high, strength decreases and fluidity of the compound decreases. Accordingly, in injection molding, the pressure distribution of the resin composition in a mold becomes broad, so that the dimensional accuracy of the fuel cell separator obtained is deteriorated. This is therefore unfavorable. For the foregoing reasons, there are preferred ranges for the proportion of the carbon material (D) with respect to the total amount of the resin composition. In the present invention, the content of the carbon material (D) in the resin composition is preferably 35 to 85% by mass, more preferably 60 to 83% by mass, and further preferably 75 to 80% by mass. The carbon material content within these ranges provides a molded article having an excellent balance of conductivity and dimensional accuracy. Further, the curing accelerator (C) is blended at a ratio of 0.1 to 20 parts by weight, preferably at a ratio of 5 to 15 parts by weight, based on 100 parts by weight of the curing agent (B). When the amount of the curing accelerator (C) blended is less than the lower limit, it takes a long period of time to perform curing in the mold. When it exceeds the upper limit, there is a fear of impairing heat stability in the vicinity of 100°C. In the present invention, the total amount of the epoxy resin (A), the curing agent (B) and the curing accelerator (C) in the resin composition is preferably 15 to 65% by mass, more preferably 17 to 40% by mass, and further preferably 20 to 25% by mass. The content of the epoxy resin (A) in the resin composition is preferably 9 to 46% by mass, more preferably 10 to 40% by mass, and further preferably 15 to 35% by mass.

Further, it is also possible to add a lubricant such as carnauba wax to the resin composition as an optional component to prevent sticking to the mold or a kneader at the time of molding processing. As the lubricant, there can also be used stearic acid, montanic acid wax or a metal salt thereof. It is also possible to add an inorganic filler such as glass fiber, silica, talc, clay or calcium carbonate, an organic filler such as wood flour, or a plasticizer, to the extent that does not deteriorate the conductivity.

In the invention, melt mixing is preferred for the production of the resin composition. The epoxy resin or the curing agent is softened at a temperature equal to or higher than a certain temperature. This temperature at which the epoxy resin or the curing agent is softened is called the softening point. In the invention, mixing may be performed in an apparatus adjusted to a temperature equal to or higher than the softening temperature of either the epoxy resin or the curing agent and at which the curing reaction does not proceed during mixing. Specifically, for the epoxy resin or the curing agent described above, the temperature is preferably from 50 to 120°C, more preferably from 70 to 100°C, and still more preferably from 80 to 90°C. Further, the kneading time is preferably from 30 seconds to 5 minutes, and more preferably from 1 to 3 minutes.

In the case of an apparatus in which a strong shear action occurs, the preset temperature may be a temperature equal to or lower than the softening temperature. In such an apparatus, the temperature of the mixture is increased to a temperature equal to or higher than the softening temperature by shear heat generation in some cases. When either the epoxy resin or the curing agent is liquid at ordinary temperature, mixing may be performed at ordinary temperature.

As the apparatus used for mixing, various conventional apparatus can be used. Examples thereof include but are not limited to a non-pressure kneader, a pressure kneader, a twin-screw extruder, a single-screw extruder, a Banbury mixer, an intermixer, a two-roll mill and a three-roll mill. Further, the material preliminarily mixed by dry mixing may be melt mixed.

According to the above-mentioned melt mixing, mixing can be performed by putting all components in the apparatus at once, so that this is advantageous in production cost.

The invention also provides the fuel cell separator obtained by molding the above-mentioned resin composition. As a molding method, there is used injection molding excellent in productivity. In injection molding, it is necessary to use a molding material having high fluidity. However, in the resin composition of the invention, the carbon material contains the high-conductive high crystalline artificial graphite, so that it requires only a small content thereof. Further, the amount of the curing accelerator is decreased, so that the proceeding of the curing reaction at a cylinder temperature is inhibited, which makes injection molding possible. One example of injection molding conditions is shown below.

The cylinder temperature is set so that it gradually increases from under a hopper to a nozzle. The preset temperature under the hopper is preferably from 30 to 80°C, and more preferably from 40 to 60°C. When the temperature under the hopper is too high, the resin composition flow back in a cylinder at the time of injection molding to result in failure to fill the cavity of the mold in some cases. Further, when the temperature under the hopper is too low, the resin composition transferred to a leading edge of the cylinder with a screw does not sufficiently melt to result in failure to fill the cavity of the mold due to poor fluidity in some cases. On the other hand, the temperature of the nozzle portion is preferably from 50 to 120°C, and more preferably from 70 to 100°C. When the temperature of the nozzle portion is too high, the epoxy resin is cured in the cylinder to result in failure to inject the resin composition from the cylinder in some cases. Further, when the temperature of the nozzle portion is too low, the resin composition does not sufficiently melt to result in failure to fill the cavity of the mold due to poor fluidity.

The mold temperature is preferably from 150 to 200°C, and more preferably from 160 to 190°C. When the mold temperature is too low, the conductive epoxy resin composition is poor in fluidity to cause the occurrence of the case where the cavity of the mold can not be filled or to take a long period of time for curing. Further, when the mold temperature is too high, the time from the start of injection into the mold to the stop of flow caused by curing becomes short, resulting in failure to fill the cavity of the mold with the conductive epoxy resin composition in some cases.

The injection pressure can be from 10 to 250 MPa, and the curing time can be from 20 seconds to 10 minutes. However, similarly to the cylinder temperature and the mold temperature, conditions may be appropriately set depending on the kinds of epoxy resin, curing agent and curing accelerator used, the shape of fuel cell separator and the like. It is also possible to perform cutting processing after molding as needed.

As described above, an important point of the invention is that the specific artificial graphite and the specific curing accelerator are used in combination and melt mixed, and further that the resulting resin composition is molded by injection molding. The results of consideration made by the present inventors on the reason why the resin composition excellent in conductivity and fluidity is obtained by the specific artificial graphite and the specific curing accelerator are shown below, but the invention should be understood not to be limited to this consideration.

In general, when filler particles are dispersed in a matrix, a larger average particle size of the filler particles results in a larger distance between the filler particles and a smaller total surface area of the filler particles, assuming that the volume ratio is the same. Accordingly, interactions between the filler particles such as friction, cohesive force and repulsive force and filler-matrix interactions such as adsorption of a matrix component to filler particle surfaces decrease, resulting in a decrease in viscosity of the whole matrix filled with the filler. In the invention, the filler indicates the graphite, and the matrix indicates the resin. Accordingly, the use of the large particle size graphite makes it possible to easily obtain the low-viscosity resin composition

The high crystalline artificial graphite powder has anisotropy in its particle, is a tabular or acicular powder in its form, and is easily split by a shear action to form fine particles. Accordingly, when used as the fuel cell separator, it is easily reduced in particle size by shear acting at the time of a kneading operation with the resin in the compound production, transfer with the screw in the cylinder of the injection molding machine in molding, and filling in the mold. For this reason, breakage of conductive path formed by the graphite particles becomes to easily occur. In the invention, this is prevented by using the large particle size artificial graphite.

Further, the use of the large particle size artificial graphite decreases shear stress at the time of the above-mentioned kneading operation and injection molding, because of low viscosity of the resin composition. As a result, shear heat generation becomes difficult to occur. When heat generation occurs, the curing reaction proceeds, although the degree varies depending on the kind of curing accelerator. Accordingly, the viscosity further increases, which causes a vicious cycle that the amount of shear heat generation increases to lead to further progress of the curing reaction.

When no high-crystalline artificial graphite is used and low-crystalline artificial graphite or carbon black is used instead, the use of a specific curing accelerator in a specified amount can also provide a resin composition not curing at the time of melt mixing or in the screw and excellent in heat stability. However, in order to obtain the same conductivity as in the case of using the high-crystalline artificial graphite, it is necessary to add the low-crystalline artificial graphite or carbon black in large amounts. Accordingly, the amount of the resin which improves fluidity of the resin composition decreases, and the amount of the carbon material used, which decreases fluidity, increases, resulting in a decrease in fluidity of the resin composition to substantially deteriorate formability.

Further, in the case of dry mixing, fracture of the graphite by kneading is difficult to occur, and a resin composition excellent in conductivity is obtained. However, in order to perform injection molding, viscosity is too high to fill the resin composition in the mold. In contrast to this, when the specific artificial graphite and the specific curing accelerator in the specified amount are used in combination, these problems are solved. When the salt of the diazabicyclo compound and the organic acid is used, the curing reaction of the resin composition is difficult to proceed at a low temperature of 100°C or less which is assumed at the time of kneading or in the cylinder of injection molding. It becomes therefore possible to inhibit shear force to be loaded on the resin composition to minimize pulverization of the specific artificial graphite. Accordingly, when it is mixed with the resin, the conductive paths are easily formed, and a pulverization state suitable for flow is obtained. That is to say, when another curing accelerator is used, the specific artificial graphite is pulverized, and the conductive paths are difficult to be formed. However, when the salt of the diazabicyclo compound and the organic acid is used, the specific artificial graphite is not pulverized, and the conductive paths are easily formed. Further, the combined use of the specific artificial graphite and the salt of the diazabicyclo compound and the organic acid can inhibit pulverization of the specific artificial graphite, which also makes it possible to increase the resin amount. When the resin amount increases, conductivity generally decreases. On the other hand, fluidity of the resin composition increases to substantially improve dimensional accuracy of the fuel cell separator. In the invention, excellent conductivity can be secured by the specific artificial graphite, so that the same conductivity as in the case of using another carbon material can be realized even when the resin is used in larger amounts. Moreover, the salt of the diazabicyclo compound and the organic acid dissociates to the diazabicyclo compound as the curing accelerator and the organic acid upon heating. At this time, the dissociation temperature depends on the strength of the organic acid. When the acid dissociation constant is high, the salt dissociates at low temperature, and when the acid dissociation constant is low, the salt dissociates at high temperature. The salt of the diazabicyclo compound and the organic acid having an acid dissociation constant within the above-mentioned preferred range is difficult to dissociate during the kneading process, and rapidly dissociates to the organic acid and the diazabicyclo compound upon heating to the mold temperature at the time of curing and molding to develop activity of the diazabicyclo compound as the curing accelerator. Then, after dissociation to the organic acid and the diazabicyclo compound, the curing reaction is initiated, so that the curing reaction is initiated through an induction period of a given time from the start of putting the material in the mold. Further, when the curing reaction proceeds, viscosity increases. Accordingly, fluidity or mold transfer properties deteriorate to pose a problem with regard to dimensional accuracy. However, because there is the induction period from the start of putting the material in the mold to the start of the curing reaction, filling in the mold can be performed in a state of high fluidity, it also becomes possible to hold down the molding pressure, and deformation of the mold due to the resin pressure is hard to occur, thus being able to obtain a molded article having high dimensional accuracy.

In addition to this, in the invention, the high crystalline artificial graphite having an average particle size within the specific range which is suitable for injection molding is used, thereby further securing the fluidity necessary for injection molding to make it compatible with conductivity. When the graphite deviated from this range is used, fluidity of the resin composition is insufficient, so that it is necessary to increase the resin amount ratio of the resin composition. In that case, conductivity is insufficient, so that the material having a problem in characteristics as the fuel cell separator is obtained.

That is to say, when the curing accelerator is used in an amount more than the specified amount, the high crystalline artificial graphite is pulverized, and the conductive paths are difficult to be formed. However, when the curing accelerator is used in the specified amount, the high crystalline artificial graphite is not pulverized, and the conductive paths become easy to be formed. As a result, the resin amount can be increased in the resin composition to increase fluidity, thereby substantially improving dimensional accuracy of the molded article, and making possible injection molding excellent in productivity.

### EXAMPLES

The invention will be illustrated in greater detail with reference to the following examples and comparative examples, but should not be construed as being limited thereby.

### (Preparation of Salt of Diazabicyclo Compound and Organic Acid)

Ten grams of DBU (a reagent chemical manufactured by Nacalai Tesque, Inc.) or 10 g of DBN (a reagent manufactured by AlfaAesar) was dissolved in 20 ml of dichloromethane to prepare a diazabicyclo compound solution. Separately, 10 g of orthophthalic acid (a reagent chemical manufactured by Nacalai Tesque, Inc.) or phenol novolak ("DL92" manufactured by Meiwa Plastic Industries, Ltd., softening point: about 90°C.) was dissolved in 20 ml of dichloromethane to prepare an organic acid solution. The diazabicyclo compound solution and the organic acid solution were mixed at a predetermined ratio, followed by stirring for 5 minutes. Precipitated crystals were separated by filtration and washed with hexane, followed by drying to obtain a salt of the diazabicyclo compound and the organic acid. For the salt of DBU and orthophthalic acid, the DBU/orthophthalic acid ratio was adjusted to 152/166 (weight ratio), for the salt of DBU and phenol novolak (containing 30% DBU), the DBU/phenol novolak ratio was adjusted to 30/70 (weight ratio), and for the salt of DBU and phenol novolak (containing 10% DBU), the DBU/phenol novolak ratio was adjusted to 10/90 (weight ratio).

### (Preparation of Molding Material)

According to the formulations shown in Table 1, 500 g of the total of materials were preliminarily mixed in a 10-liter Henschel mixer, and then, kneaded in a 1-liter pressure kneader at a chamber temperature of 100°C for 5 minutes. The resulting product was pulverized with a pulverizer to particles having a particle size of about 2 mm to form a molding material. Units in the formulations in Table 1 are expressed in percentages by mass.
In addition, artificial graphite having an average particle size of 150 µm is hardly commercially available. Accordingly, a residue obtained by passing a commercially available artificial graphite powder having an average particle size of less than 50 µm through a 70-mesh or 100-mesh sieve was used in each Example, and the commercially available artificial graphite powder was used without modification in each Comparative Example. Further, the crystal plane distance of a graphite raw material was determined by measuring the crystal plane distance of a raw material graphite powder at a step width of 0.01 deg and a scan speed of 0.3 sec/step, using an X-ray diffractometer (manufactured by Rigaku Corporation), from a 2θ position of a 002 plane peak as a maximum peak observed in the vicinity of 2θ=25 to 30 deg. Furthermore, the average particle size of a graphite raw material was determined by measuring the average particle size of a graphite powder using a laser diffraction type particle size distribution analyzer manufactured by Shimadzu Corporation.

### (Preparation of Molded Article)

Using as an injection molding machine a molding machine for thermosetting resins (manufactured by Hishiya Seiko Co., Ltd.) having a mold clamping force of 80 t, the cylinder temperature was set to 50°C under a hopper, the nozzle temperature to 90°C, the mold temperature to 170°C, the injection rate to 20 mm/sec, and the curing time to from 60 to 180 sec. The molding pressure was appropriately set within the range of 30 to 70 MPa. Using this injection molding machine, the molding material was injection molded into a square thin tabular form 100 mm on one side and 2 mm in thickness. Cut processing was performed for the resulting molded article to form a test specimen.

### (Evaluation of Conductivity)

The resistance in a penetrating direction was measured by the method shown in Fig. 2 to make the evaluation of conductivity. A sample 21 was set between electrodes 23 with the interposition of carbon papers 22. The electric resistance was calculated from the current allowed to flow between the electrodes (measured with an ammeter 24) and the voltage between the carbon papers (measured with a voltmeter 25), and multiplied by the area of the sample to obtain the resistivity in the penetrating direction. The results thereof are shown together in Table 1.

### (Measurement of Progress of Curing Reaction at 100°C)

Using a moving die rheometer (Monsanto MDR2000), changes in torque associated with progress of curing reaction of the molding material at 100°C were measured. The measuring time was 10 minutes. An increase in torque indicates the progress of curing. The results thereof are shown together in Figs. 3 to 5 and Table 1. In Table 1, for one in which no increase in torque was observed, "good" is described in a column of heat stability, and for one in which an increase in torque was observed, "poor" is described.

### (Evaluation of Fluidity)

In accordance with JIS-K-7199, using a capillary rheometer (Capillograph manufactured by Toyo Seiki Seisaku-sho Ltd.), the viscosity of the molding material at the time of 170°C and a shear rate of 1000 s⁻¹ before an increase in viscosity due to the curing reaction was observed was measured. The results thereof are shown together in Table 1.

(Measurement of Dimensional Accuracy of Molded Article) The thickness of five places of four corners and a central part of the square thin tabular molded article 100 mm on one side and 2 mm in thickness obtained by injection molding was measured. The difference between the maximum value and the minimum value thereof was taken as a thickness range. The smaller thickness range is judged as the better dimensional accuracy. The results thereof are shown together in Table 1.

### (Measurement of Impurities in Molded Article)

In accordance with JIS R7212, the ash content in the molded article was measured. The results thereof are shown together in Table 1.

**Table 1**

| | | Ex.1 | Ex. 2 | Ex. 3 | Ex.4 | Com. Ex.1 | Com. Ex. 2 | Com. Ex. 3 | Com. Ex.4 |
|---|---|---|---|---|---|---|---|---|---|
| Formulation (% by mass) | Orthocresol Novolak Type Epoxy Resin | 12.1 | 11.3 | 12.1 | 12.1 | 12.1 | 11.3 | 12.1 | 12.1 |
| | Phenol Type Novolak Resin | 6.1 | 5.7 | 6.1 | 6.1 | 6.1 | 6.1 | 6.1 | 6.1 |
| | Orthophthalate of DBU | 1.2 | 2.4 | | | | 1.2 | 1.2 | 1.2 |
| | Phenol Novolak Salt of DBU (DBU: 30%) | | | 1.2 | | | | | |
| | Phenol Novolak Salt of DBN (DBN:10%) | | | | 1.2 | | | | |
| | Triphenylphosphine | | | | | 1.2 | | | |
| | Artificial Graphite 1 | 77.7 | 77.7 | 77.7 | 77.7 | 77.7 | | | |
| | Artificial Graphite 2 | | | | | | 77.7 | | |
| | Artificial Graphite 3 | | | | | | | 77.7 | |
| | Expanded Graphite | | | | | | | | 77.7 |
| | Lubricant | 2.9 | 2.9 | 2.9 | 2.9 | 2.9 | 2.9 | 2.9 | 2.9 |
| Test Results | Resistance in Penetrating Direction (mΩ·cm²) | 9.0 | 10.0 | 9.8 | 10.2 | 19.0 | 10,5 | 26.5 | 10.4 |
| | Viscosity at 170°Cx1,000 sec⁻¹ (Pa·s) | 50 | 53 | 52 | 59 | 84 | 299 | 320 | 218 |
| | Thickness range (µm) | 23.9 | 27.3 | 25.4 | 27.5 | 20.2 | 100.9 | 143.0 | 94.0 |
| | Ash Content (%) | <0.1 | <0.1 | <0,1 | <0.1 | <0.1 | <0.1 | <0.1 | 0.41 |
| | Heat Stability | Good | Good | Good | Good | Poor | Good | Good | - |

Orthocresol Novolak Type Epoxy Resin: Orthocresol novolak type epoxy resin EOCN-103S manufactured by Nippon Kayaku Co., Ltd., softening temperature: 81 to 85°C
Phenol Type Novolak Resin: Resitop PSM4324 manufactured by Gunei Chemical Industry Co., Ltd., softening temperature: 98 to 102°C
Artificial Graphite 1: A residue obtained by passing SGP-100 µm manufactured by SEC (artificial graphite obtained by burning needle coke, average particle size: 100 µm) through a 70-mesh sieve, average particle size: 240 µm, plane distance: 3.357 angstroms
Artificial Graphite 2: SGP-50 µm manufactured by SEC (artificial graphite obtained by burning needle coke, average particle size: 50 µm, plane distance: 3.357 angstroms)
Artificial Graphite 3: SGL-50 µm manufactured by SEC (artificial graphite obtained by burning massive coke, average particle size: 50 µm, plane distance: 3.365 angstroms)
Expanded Graphite: FL 300 manufactured by Nippon Carbon Co., Ltd.
Lubricant: Carnauba wax

In all of respective Examples and Comparative Examples, there were used the orthocresol novolak type epoxy resin and the phenol type novolak resin as the curing agent. Further, in respective Examples, the salt of the diazabicyclo compound and the organic acid, which was prepared in the above, was used as the curing accelerator, and the high crystalline artificial graphite having a particle size of 150 µm or more was used as the carbon material. In contrast to this, triphenylphosphine was used as the curing accelerator in Comparative Example 1, the high crystalline artificial graphite having a particle size of less than 150 µm was used in Comparative Example 2, the usual artificial graphite having a particle size of less than 150 µm was used in Comparative Example 3, and the expanded graphite was used in Comparative Example 4.

As a result, the molded articles of respective Examples have low electric resistance, the molding materials also have low viscosity, it is also possible to obtain the molded articles by injection molding, and the dimensional accuracy also becomes high. Further, from the fact that changes in torque at 100°C scarcely occur at least within 5 minutes, the progress of the curing reaction is very slow at 100°C, and the molding materials are excellent in heat stability. In particular, in Examples 1 and 2 in which the salt of DBU and orthophthalic acid is used as the curing accelerator, the molded articles having higher strength are obtained among Examples. This is assumed to be because heat stability is high, so that an increase in viscosity associated with the progress of the curing reaction at the kneading temperature or the cylinder temperature is difficult to occur, thereby preventing fracture of the high crystalline artificial graphite in the kneading process or the molding process. Further, the molded articles have low electric resistance, so that there is little fear of a decrease in efficiency associated with voltage loss of internal resistance at the time of electric generation, when used as the fuel cell separator. Furthermore, the ash is scarcely observed, so that the possibility of imparting damage to an electrolyte membrane is also low.

Comparative Example 1 using triphenylphosphine as the curing accelerator is inferior in heat stability and electric resistance to other Examples. Comparative Example 2 is excellent in heat stability and low in electric resistance, but high in viscosity. This is therefore unsuitable as the material for injection molding. Comparative Example 3 is excellent in heat stability, but has a problem with both electric resistance and viscosity. Comparative Example 4 is low in electric resistance, but high in viscosity. Further, the ash content is large, so that there is also the possibility of imparting damage to an electrolyte membrane.

It is apparent from the above that the fuel cell separator excellent in conductivity and formability and containing little impurities is obtained by the invention.

## Claims

1. A fuel cell separator resin composition comprising: (A) an epoxy resin; (B) a curing agent; (C) a curing accelerator comprising a salt of a diazabicyclo compound and an organic acid; and (D) a carbon material, wherein the content of the carbon material (D) is 35 to 85% by mass based on the total amount of the composition, wherein the carbon material (D) comprises high crystalline artificial graphite having a particle size of 150 to 500 µm in an amount of 5 to 100% by mass based on the total amount of the carbon material (D), and wherein the content of the curing accelerator (C) is 1 to 20 parts by weight per 100 parts by weight of the curing agent (B).

2. The fuel cell separator resin composition according to claim 1, wherein the organic acid has an acid dissociation constant of 0 to 10.

3. The fuel cell separator resin composition according to claim 1 or 2, wherein the organic acid is an aromatic organic acid.

4. The fuel cell separator resin composition according to any one of claims 1 to 3, wherein the organic acid is a multivalent organic acid.

5. The fuel cell separator resin composition according to any one of claims 1 to 4, wherein the organic acid is at least one member selected from the group consisting of is orthophthalic acid, isophthalic acid, terephthalic acid and trimesic acid.

6. The fuel cell separator resin composition according to any one of claims 1 to 5, wherein the diazabicyclo compound is 1,8-diazabicyclo(5,4,0) undecene-7 or 1,5-diazabicyclo(4,3,0) nonene-5.

7. The fuel cell separator resin composition according to any one of claims 1 to 6, wherein the curing agent (B) has two or more phenolic hydroxyl groups in its molecule.

8. The fuel cell separator resin composition according to any one of claims 1 to 7, wherein the epoxy resin (A) is a multifunctional epoxy resin.

9. The fuel cell separator resin composition according to any one of claims 1 to 8, wherein the high crystalline artificial graphite has a crystal plane distance of 0.3354 nm to 0.3365 nm.

10. The fuel cell separator resin composition according to any one of claims 1 to 9, wherein the high crystalline artificial graphite is one obtained by burning needle coke.

11. A method for producing the fuel cell separator resin composition according to any one of claims 1 to 10, comprising performing melt kneading at a temperature equal to or higher than a softening temperature of the epoxy resin (A) or the curing agent (B) and at which curing reaction does not proceeds during mixing.

12. A fuel cell separator produced by injection molding of the fuel cell separator resin composition according to any one of claims 1 to 10.

## Patentansprüche

1. Harzzusammensetzung für einen Brennstoffzellenseparator umfassend: (A) ein Epoxidharz; (B) ein Härtemittel; (C) ein Härtebeschleuniger umfassend ein Salz einer Diazabicycloverbindung und einer organischen Säure; und (D) ein Kohlenstoffmaterial, wobei der Anteil des Kohlenstoffmaterials (D) 35 bis 85 Masse-% beträgt, bezogen auf die Gesamtmenge der Zusammensetzung, wobei das Kohlenstoffmaterial (D) ein künstliches Graphit mit hoher Kristallinität umfasst, mit einer Partikelgröße von 150 bis 500 µm in einer Menge von 5 bis 100 Masse-% bezogen auf die Gesamtmenge des Kohlenstoffmaterials (D), und wobei der Anteil des Härtebeschleunigers (C) 1 bis 20 Gewichtsteile je 100 Gewichtsteile des Härtemittels (B) beträgt.

2. Harzzusammensetzung für einen Brennstoffzellenseparator nach Anspruch 1, wobei die organische Säure eine Säuredissoziationskonstante von 0 bis 10 aufweist.

3. Harzzusammensetzung für einen Brennstoffzellenseparator nach Anspruch 1 oder 2, wobei die organische Säure eine aromatische organische Säure ist.

4. Harzzusammensetzung für einen Brennstoffzellenseparator nach einem der Ansprüche 1 bis 3, wobei die organische Säure eine mehrwertige organische Säure ist.

5. Harzzusammensetzung für einen Brennstoffzellenseparator nach einem der Ansprüche 1 bis 4, wobei die organische Säure wenigstens ein Element ist, gewählt aus der Gruppe bestehend aus Orthophthalsäure, Isophthalsäure, Terephthalsäure und Trimesinsäure.

6. Harzzusammensetzung für einen Brennstoffzellenseparator nach einem der Ansprüche 1 bis 5, wobei die Diazabicycloverbindung 1,8-Diazabicyclo(5,4,0)undecen-7 oder 1,5-Diazabicyclo(4,3,0)nonen-5 ist.

7. Harzzusammensetzung für einen Brennstoffzellenseparator nach einem der Ansprüche 1 bis 6, wobei das Härtemittel (B) zwei oder mehr phenolische Hydroxylgruppen in seinem Molekül aufweist.

8. Harzzusammensetzung für einen Brennstoffzellenseparator nach einem der Ansprüche 1 bis 7, wobei das Epoxidharz (A) ein multifunktionelles Epoxidharz ist.

9. Harzzusammensetzung für einen Brennstoffzellenseparator nach einem der Ansprüche 1 bis 8, wobei das künstliche Graphit mit hoher Kristallinität einen Abstand der Kristallebenen von 0,3354 nm bis 0,3365 nm aufweist.

10. Harzzusammensetzung für einen Brennstoffzellenseparator nach einem der Ansprüche 1 bis 9, wobei das künstliche Graphit mit hoher Kristallinität durch das Verbrennen von Nadelkoks erhalten wird.

11. Verfahren zur Herstellung einer Harzzusammensetzung für einen Brennstoffzellenseparator nach einem der Ansprüche 1 bis 10, umfassend das Schmelzkneten bei einer Temperatur, welche einer Erweichungstemperatur des Epoxidharzes (A) oder des Härtemittels (B) entspricht oder höher ist, und bei welcher die Härtereaktion während des Mischens nicht fortschreitet.

12. Brennstoffzellenseparator hergestellt durch Spritzgießen der Harzzusammensetzung für den Brennstoffzellenseparator nach einem der Ansprüche 1 bis 10.

## Revendications

1. Composition de résine pour séparateur de pile à combustible comprenant : (A) une résine époxyde ; (B) un agent de durcissement ; (C) un accélérateur de durcissement comprenant un sel d'un composé diazabicyclo et d'un acide organique ; et (D) une matière carbonée, où la teneur de la matière carbonée (D) est 35 à 85 % en masse sur la base de la quantité totale de la composition, où la matière carbonée (D) comprend du graphite artificiel hautement cristallin ayant une taille de particule de 150 à 500 µm en une quantité de 5 à 100 % en masse sur la base de la quantité totale de la matière carbonée (D), et où la teneur de l'accélérateur de durcissement (C) est 1 à 20 parties en poids pour 100 parties en poids de l'agent de durcissement (B).

2. Composition de résine pour séparateur de pile à combustible selon la revendication 1 où l'acide organique a une constante de dissociation d'acide de 0 à 10.

3. Composition de résine pour séparateur de pile à combustible selon la revendication 1 ou 2 où l'acide organique est un acide organique aromatique.

4. Composition de résine pour séparateur de pile à combustible selon l'une quelconque des revendications 1 à 3 où l'acide organique est un acide organique multivalent.

5. Composition de résine pour séparateur de pile à combustible selon l'une quelconque des revendications 1 à 4 où l'acide organique est au moins un membre choisi dans le groupe consistant en l'acide orthophtalique, l'acide isophtalique, l'acide téréphtalique et l'acide trimésique.

6. Composition de résine pour séparateur de pile à combustible selon l'une quelconque des revendications 1 à 5 où le composé diazabicyclo est le 1,8-diazabicyclo(5,4,0)undécène-7 ou le 1,5-diazabicyclo(4,3,0)nonène-5.

7. Composition de résine pour séparateur de pile à combustible selon l'une quelconque des revendications 1 à 6 où l'agent de durcissement (B) a deux ou plusieurs groupes hydroxyle phénoliques dans sa molécule.

8. Composition de résine pour séparateur de pile à combustible selon l'une quelconque des revendications 1 à 7 où la résine époxyde (A) est une résine époxyde multifonctionnelle.

9. Composition de résine pour séparateur de pile à combustible selon l'une quelconque des revendications 1 à 8 où le graphite artificiel hautement cristallin a une distance des plans des cristaux de 0,3354 nm à 0,3365 nm.

10. Composition de résine pour séparateur de pile à combustible selon l'une quelconque des revendications 1 à 9 où le graphite artificiel hautement cristallin est un graphite artificiel hautement cristallin obtenu par combustion de coke en aiguilles.

11. Procédé pour produire la composition de résine pour séparateur de pile à combustible selon l'une quelconque des revendications 1 à 10 comprenant la mise en oeuvre d'un malaxage à l'état fondu à une température égale ou supérieure à une température de ramollissement de la résine époxyde (A) ou de l'agent de durcissement (B) et à laquelle une réaction de durcissement ne se déroule pas pendant le mélange.

12. Séparateur de pile à combustible produit par moulage par injection de la composition de résine pour séparateur de pile à combustible selon l'une quelconque des revendications 1 à 10.
